**Europäisches Patentamt**

**European Patent Office**

**Office européen des brevets**

(11) Publication number: **0 215 781**

**B1**

(12) **EUROPEAN PATENT SPECIFICATION**

(45) Date of publication of patent specification: **27.06.90**

(21) Application number: **85901867.3**

(22) Date of filing: **01.04.85**

(86) International application number:
**PCT/US85/00552**

(87) International publication number:
**WO 86/05708 09.10.86 Gazette 86/22**

(51) Int. Cl.⁵: **B 01 D 19/00,** D 21 C 11/06,
D 21 D 5/26

(54) **A DEAERATION TANK AND INSTALLATION USING THE TANK.**

(43) Date of publication of application:
**01.04.87 Bulletin 87/14**

(45) Publication of the grant of the patent:
**27.06.90 Bulletin 90/26**

(84) Designated Contracting States:
**AT DE FR SE**

(56) References cited:
**US-A-2 757 582
US-A-2 849 930
US-A-3 421 622
US-A-3 832 276
US-A-3 963 561
US-A-4 209 359**

(73) Proprietor: **WEYERHAEUSER COMPANY
Tacoma, WA 98477 (US)**

(72) Inventor: **MEREDITH, Michael, Dean
3940 Blossom Drive
Tacoma, Pierce County, WA 98422 (US)**
Inventor: **BENTVELZEN, Joseph, Maria
Route 1 Box 668B
Sumner, Pierce County, WA 98390 (US)**
Inventor: **JORDAN, Marvin, Franklin
1138 Twenty-Third Avenue
Longview, Wahkiakum County, WA 98632 (US)**

(74) Representative: **Patentanwälte Grünecker,
Kinkeldey, Stockmair & Partner
Maximilianstrasse 58
D-8000 München 22 (DE)**

Courier Press, Leamington Spa, England.

EP 0 215 781 B1

## Description

The present invention relates to a deaerator as outlined in the preamble of claim 1.

One of the problems encountered when bleaching pulp with oxygen is attempting to wash the pulp after the oxygen stage. The oxygen entrained in the pulp mat reduces the vacuum on the vacuum washer and mixes with the wash water to form foam which reduces the vacuum in the washer and prevents the chemicals and water from passing through the mat.

A deaeration tank as identified above is disclosed in US—A—4 209 359. The known deaerator tank is used for a slurry usually containing no more than 3 percent by weight of fibre. The known tank has an inlet pipe on the upper portion and an outlet near its base. The inlet pipe is tangentially positioned on the tank to create a swirling motion in the slurry. In addition, an axial-flow impeller and a radial-flow impeller are used, both are driven by an electric motor.

US—A—2 757 582 disclosed a tank for a separation of gas and undesired particles from liquids. The known tank includes an inlet pipe and two outlets. One of the outlets is arranged coaxially with the center line of the tank at its bottom, and the upper outlet, together with the inlet pipe, is arranged near the upper portion of the tank. The bottom and a cover portion of the tank are curved in order to create three differently formed vortex flows within the tank. The curvatures have to be calculated exactly and require maintaining of specific physical properties of the liquid and its contents.

There have been a further number of proposals for the deaerating the pulp before the washer. One proposal is to use a "Deculator" process which is described by MacGregor, "The Deaeration of Paper, Paperboard and Hardboard Stock by the Deculator Process", Appita, Vol. 22, No. 6 May 1969, pp. xvii—xxi. It is also described in *Paper*, Vol. 184, No. 11, 1975, December 8, 1975, pp. 667—668 and in Jacobson, "Complete Deaeration as a Basic Necessity: The Deculator System", *Paper* April 20, 1981, pp. 61—62, 64, and 67. The process involves the rapid acceleration and spraying of stock into a long 6 foot (1.83 m) diameter stainless steel receiver where it is boiled under vacuum while being impinged against a suitable target surface. This installation involves expensive equipment including vacuum systems and vacuum vessels.

Other large degassing chambers are shown in Roymoulik, et al. US—A—3,832,276 and in Richerter, US—A—Patent 3,963,561. These are large expensive installations utilizing large tanks which must be built to withstand pressure. The Richter patent describes a large pressure vessel.

The inventors decided that there was a need for a small deaeration tank of simple design which may be at either atmospheric pressure or under low pressure or vacuum and an installation of operating this tank which would allow pulp which had been treated with oxygen to be deaerated before being washed. Preferably it would be the same diameter as an oxygen reactor so that it could be placed on top of the reactor and be supported by the reactor. It would have no moving parts, so there would be no need for motors to be mounted on or near the tank. A closed tank would allow steam or oxygen to be recovered.

They devised an installation in which the deaerator is a small tank having an inlet pipe, an outlet, and a tangential swirl inducing inlet pipe. The locations and sizes of these elements provide optimum deaeration.

In the installation the swirl inducing fluid is the filtrate from the washer after the oxygen bleach.

Figure 1 is a diagrammatic view of the oxygen reactor installation from the inlet thick stock pump through the washer.

Figure 2 is an isometric view of the deaeration tank.

Figure 3 is a side plan view of the deaeration tank.

Figure 4 is a top plan view of the deaeration tank.

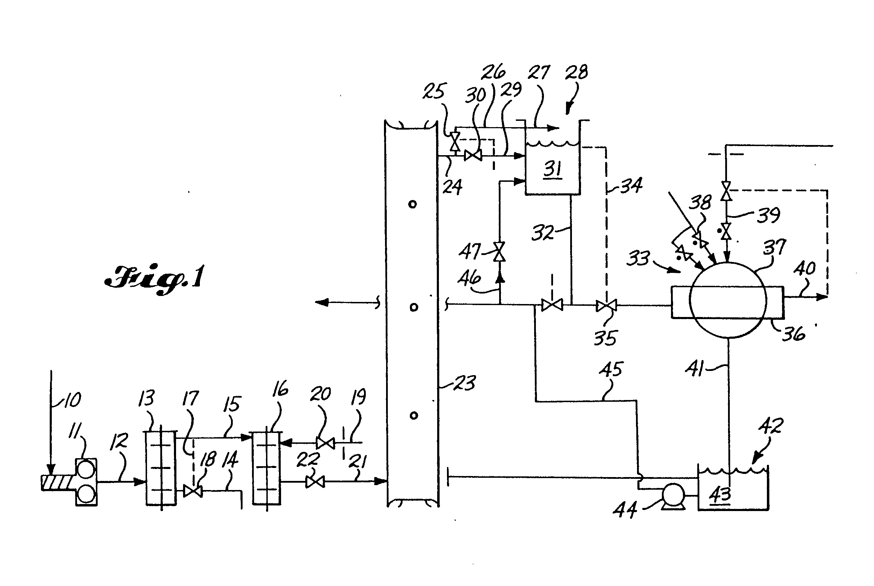

The overall oxygen process is shown in diagrammatic form in Figure 1. In this process, the pulp is carried through line 10 into thick stock pump 11 where it is forced through line 12 to steam mixer 13. In the steam mixer 13 steam from line 14 is combined with the pulp and heats the pulp. The heated pulp is carried through line 15 to oxygen mixer 16.

The temperature of the pulp in line 15 is sensed by temperature sensor 17. The sensor 17 operates valve 18 which controls the flow of steam through line 14. In oxygen mixer 16 the pulp is mixed with oxygen from line 19. The amount of oxygen added to the pulp is controlled by valve 20.

The oxygenated pulp is carried through line 21 and isolation valve 22 into a tower 23. The tower shown is an open tower and the only pressure within the tower is the hydrostatic head. However, if desired it may be a closed pressure tower.

From the top of the tower the oxygenated pulp is carried through line 24, valve 25 and line 26 to the oxygen deaeration tank inlet 27. Valve 25 is the pressure control valve. Although the pulp is at a consistency of 8—15% and usually 11—14%, it flows easily to the system because of the oxygen within the pulp.

Inlet 27 carries the pulp into the deaeration tank 28. An emergency line 29 with its valve 30 is also provided in case of an upset condition within the system. The valve 30 is normally closed. In an upset condition, the valve 25 would be closed and the valve 30 opened to carry the pulp directly into the tank. The deaerated pulp 31 in the deaeration tank 28 leaves through line 32 to pulp washer 33. The flow in the line 32 is controlled by the height of the pulp in the deaeration tank 28. The pulp is maintained at a constant height in the tank 28. Deaeration tank pulp height sensor 34 controls valve 35 in line 32. The pulp from line 32 enters the tank 36 of washer 33 and the pulp is picked up on drum 37. The mat on the drum 37 is washed by washer heads 38 and 39, dewatered by the vacuum drum 37 and the washed and dewatered pulp leaves the washer 33 at 40.

The filtrate from the pulp mat is carried through the mat into the drum 37 and through the drop leg 41 into the filtrate tank 42.

In the diagram a vacuum washer is shown in which the washer heads 38 carry fresh water and washer head 39 carries counterflow filtrate from a subsequent washer. The flow of counterflow filtrate in washer head 39 is controlled by a valve in the line which is controlled by the level in the filtrate tank of the subsequent washer.

The filtrate 43 in filtrate tank 42 is carried by pump 44 and counterflow line 45 to an earlier washer or decker to be used as wash water. Again the flow of filtrate in this line is controlled by the height of filtrate 43 in tank 42. The filtrate must be maintained at a predetermined height to maintain the vacuum in the washer 33.

Some of the filtrate from line 45 is carried by line 46 to the deaeration tank 28 to be used as the swirling fluid in the deaeration tank. A valve 47 controls the flow in line 46. The amount of filtrate flowing through line 46 will maintain the consistency of pulp in tank 28 at a pumpable consistency. The consistency should be between 1 and 5%. The best consistency is around 3%.

Pressure washers may be substituted for the vacuum washers shown.

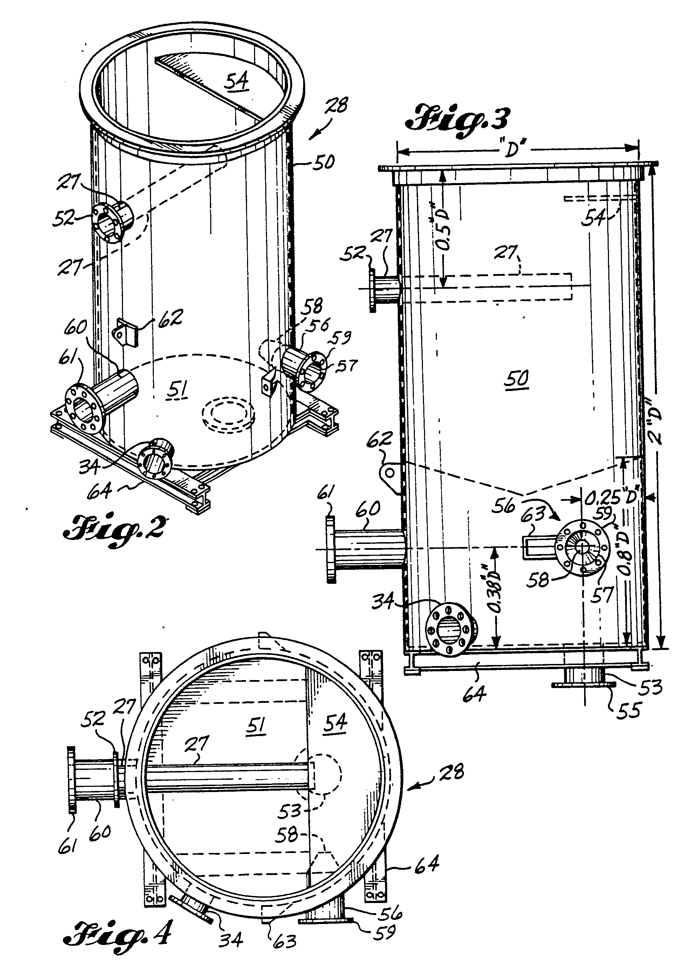

The deaeration tank 28 is shown in Figures 2—4. The deaeration tank 28 is shown as a cylindrical tank 50 having an open top and a flat bottom 51. The tank has an exterior diameter "D". The diameter of the deaeration tank would normally be the same size as the diameter of tank 23 so that it can be placed on top of or hung from the side of tank 23. The deaeration tank, however, may have a diameter of from 0.75 to 1.5 times the diameter of the tank 23. The tank normally has an exterior height of approximately 2"D". The tank should be high enough to prevent the swirling slurry within the tank from spilling over the sides. This height will depend upon the consistency of the pulp slurry. For pulp slurries in the range of 8—15% the exterior height of the tank should be between 1 and 3"D". The nominal height of the pulp slurry in the deaeration tank 28 is 0.8"D". The nominal height of the pulp slurry is the height of the slurry if it were at rest or as measured by its hydrostatic head or by a manometer. The slurry is actually swirling in the deaeration tank and its surface is dished with the center being lower than the nominal height and the periphery being higher than the nominal height. For diagrammatic purposes the height of the slurry in Figure 3 is shown as being between the bottom of the tank and the highest point of the slurry. This was only to illustrate that the dimension was between the bottom of the tank and the surface of the slurry. The dimension given, 0.8"D", is the nominal height of the slurry. The nominal height of the slurry may be between 0.4 and 1.0"D".

The inlet pipe 27 of the tank 28 has its center line between the upper surface of the slurry and the top edge of tank 50, and on a diameter line of the tank 50. The inlet pipe 27 should allow the pulp to enter the tank above the surface of the slurry and to splash against the side wall of the tank 50. The inlet pipe should be low enough in the tank to prevent the pulp from splashing from the tank. It would normally be located from the top of the tank a distance equal to 10—50% of the height of the tank. In a tank having a height of 2"D" and a nominal slurry height of 0.8"D", the horizontal center line of the inlet pipe would typically be approximately 0.5"D" below the upper edge of the tank 50. The inlet pipe extends across the interior the tank a distance greater than 0.5"D" to allow the incoming pulp to strike the side wall of the tank 50. It would usually extend across the tank approximately 0.75"D". Its length is actually slightly less than this because of its relationship with the outlet 53. Above the inlet pipe 27 and extending across the space between the end of inlet of pipe 27 and the opposing side wall of tank 50 is a splash plate 54. The inlet pipe 27 has an outer flange 52 which connects with a flange on pipe 26. The outside diameter of the inlet pipe 27 is between 0.07 and 0.16"D". The usual outside diameter is approximately 0.095"D".

The tank 28 may be closed and be a pressure or vacuum tank. It will be closed if the oxygen or steam is being recovered. It would be built to withstand pressures of ±1 bar (±1 atmosphere).

The outlet 53 is located in the bottom plate 51 of the deaeration tank 28. Again the outlet 53 will be sized to handle the amount of pulp leaving the tank. This will be greater than the inlet pipe because recycled filtrate is added to the slurry in the tank 50. The outlet 53 has an outside diameter of between 0.12 and 0.2"D". The usual outside diameter of the outlet is approximately 0.14"D". The outlet 53 has a center line located in the same vertical plane as the center line of the inlet line 27. The center line of the outlet 53 is also located between 0.15 and 0.4"D", usually approximately 0.25"D", from the outside of the tank 50 directly below the outlet of inlet pipe 27. As can be seen in Figure 4, the exact location of the outlet of inlet pipe 27 is along a chord line of the outlet 53. This chord line is approximately the diameter of the inlet pipe 27. The outlet 53 has a flange 55 which attaches to a flange on line 32.

The oxygen filled slurry is carried into the tank by the inlet pipe 27 and splashes against the side of the tank 50 opposite the inlet and drains down to the body of the slury in the tank 28.

The height of slurry in tank 50 is controlled by the height sensor 34 at the bottom of the tank. The sensor 34 is at an angle of about 60° from the center line of the inlet pipe 27. The sensor controls the flow in outlet pipe 32 by operating the valve 25 between the deaeration tank and the washer.

The body of slurry in tank 28 is swirled by filtrate from washer 33. The velocity of filtrate entering the deaeration tank 28 is 6.1 meters per second (20 feet per second), at a 2% pulp consistency. The velocity may range from 4.57 to 12.19 meters per second (15 to 40 feet per second). This filtrate enters the tank through the filtrate swirler inlet 56. The filtrate swirler inlet 56 has a vertical center line that is between the bottom of the tank 50 and the surface of the slurry. It usually would be located from the bottom of the tank a distance equal to one-half of the distance between the bottom of the tank and the nominal height of the pulp slurry. In a tank in which the nominal height of the slurry is 0.8"D" the vertical center line of the filtrate inlet 56 would be 0.4"D". It is preferred that the filtrate swirl inlet be located from the bottom of the tank a distance equal to 10—25% of the height of the tank. The horizontal center line of the filtrate swirler-inlet 56 is between a tangent to the tank 50 and a radial line of the tank 50 that is perpendicular to the radial line passing through the tangent point. It should be placed off a radial line to provide a swirl to the slurry, and off a tangent to allow easier construction. It usually is placed in the same vertical plane as the center line of outlet 53. The filtrate inlet 56 has a diameter at its outer end 57 of from 0.07 to 0.16"D", usually 0.095"D", and necks down to a diameter at its inner end 58 of from 0.02 to 0.04, usually 0.028"D". This construction accelerates the filtrate to the required velocity as it enters the tank 28. The filtrate inlet has a flange 59 at its outer end which attaches to a flange on line 46.

The emergency bypass line 60 also has its center line between the bottom of the tank 50 and the upper surface of the slurry. It also would usually be placed one-half of the way between the bottom of the tank and the nominal height of the slurry. In a tank having a nominal slurry height of 0.8"D" it would usually be 0.4"D" from the bottom of the deaeration tank 28. It is in vertical alignment with the inlet pipe 27 and has a diameter of 0.12 to 0.2"D". It usually has a diameter of approximately 0.14"D". The flange 61 attaches to a flange on line 29.

Mounting brackets 62 and 63 and a mounting platform 64 are also shown.

A 50 ton of pulp per day installation has a tank with an outside diameter of 106.68 cm (42") and a height of 211.46 cm (83-1/4"). The inlet pipe is 53.34 cm (21") from the top of the tank. The outlet is 26.67 cm (10.5") from the center of the tank. The outside diameter of the inlet pipe is 10.16 cm (4"), of the outlet is 15.24 cm (6"), of the outer part of the filtrate inlet is 10.16 cm (4"), of the outlet of the filtrate inlet is 3.05 cm (1.2"), and of the bypass line is 15.24 cm (6").

## Claims

1. A deaerator comprising a tank (28, 50) being closed at its base (51) and having a diameter "D", an inlet pipe (27) on said tank (28, 50) and an outlet (53) to said tank (28, 50), characterized by said tank (28, 50) having a height in the range of 1 to 3"D", and by a first and a second inlet pipe (27, 56) on said tank (28, 50), said first inlet pipe (27) extending across said tank (28, 50) along a diameter and extending into said tank (28, 50) greater than 0.5"D",

said first inlet pipe (27) being located in the range of 10—50% of the height of said tank (28, 50) from the top of the tank (28, 50),

said outlet (53) being arranged at the base (51) of said tank (28, 50),

said second inlet pipe (56) being arranged on the side of the tank (28, 50),

said second inlet pipe (56) extending in a direction that is between a tangent to the tank (28, 50) and a radial line of the tank (28, 50) that is perpendicular to the radial line passing through the tangent point,

said second inlet pipe (56) being located in the range of 15—25% of the height of the tank (28, 50) above the base (51) of the tank (28, 50).

2. The deaerator of claim 1 in which the center line of said outlet (53) is located directly below the outlet of said inlet pipe (27).

3. The deaerator of claim 2 in which said outlet (53) is located approximately 0.25"D" from the wall opposite said first inlet pipe outlet.

4. The deaerator of any one of claims 1 to 3 in which

said tank (28, 50) has a height of approximately 2"D",

said inlet (27) has a horizontal center line located approximately 0.5"D" from the top of said tank (28, 50),

said second inlet pipe (56) has a center line approximately midway between said radial line and said tangent and approximately 0.4"D" from the base (51) of said tank (28, 50).

5. The deaerator of any one of claims 1 to 4 in which said tank (28, 50) is open at the top.

6. The deaerator of any one of claims 1 to 4 in which said tank (28, 50) is closed at the top.

7. An installation for mixing oxygen with pump comprising the deaerator of any one of claims 1 to 6 including means (25, 26) connecting said first inlet pipe (27) to an outlet of a reactor tank (23) means (32) connecting said outlet (53) to an inlet of a washer (33) for separating a pulp slurry into a pulp mat and a filtrate, and means (46) connecting said second inlet pipe (56) to a filtrate tank (42) collecting filtrate from said washer (33).

8. The installation of claim 7 in which said tank (28, 50) has a diameter 0.75 to 1.5 times the diameter of said reactor tank (23).

## Patentansprüche

1. Ein Entlüfter mit einem Tank (28, 50), der an seiner Unterseite (51) geschlossen und einen Durchmesser "D" aufweist, mit einem Einlaßrohr (27) am Tank (28, 50) und einem Auslaß (53) zum Tank (28, 50) ist charakterisiert durch eine Höhe des Tanks (28, 50) im Bereich von 1 bis 3"D", und durch ein erstes und ein zweites Einlaßrohr (27, 56) am Tank (28, 50), wobei das erste Einlaßrohr (57) sich durch den Tank (28, 50) entlang eines Durchmessers erstreckt und sich in den Tank (28, 50) mehr als 0,5"D" hinein erstreckt, wobei sich das erste Einlaßrohr (57) im Bereich von 10 bis 50% der Höhe des Tankes (28, 50) von dem oberen Ende des Tankes (28, 50) befindet, der Auslaß (53) an der Unterseite (51) des Tankes (28, 50) angeordnet ist, das zweite Einlaßrohr (56) an der Seite des Tankes (28, 50) angeordnet ist, das zweite Einlaßrohr (56) sich in einer Richtung erstreckt, die zwischen einer Tangente zum Tank (28, 50) und einer radialen Linie des Tankes (28, 50) liegt, die senkrecht zur den Tangentialpunkt schneidenden radialen Linie liegt, das zweite Einlaßrohr (56) im Bereich von 15 bis 25% der Höhe des Tanks (28, 50) über der Unterseite (51) des Tankes (28, 50) angeordnet ist.

2. Der Entlüfter aus Anspruch 1, in dem die Mittellinie des Auslasses (53) direkt unterhalb des Auslasses des Einlaßrohres (27) angeordnet ist.

3. Der Entlüfter von Anspruch 2, in dem der Auslaß (53) etwa 0,25"D" von der dem ersten Einlaßrohr gegenüberliegenden Wand angeordnet ist.

4. Der Entlüfter nach einem der Ansprüche 1 bis 3, in dem der Tank (28, 50) eine Höhe von etwa 2"D" hat, der Einlaß (27) eine horizontale Mittellinie aufweist, die etwa 0,5"D" vom oberen Ende des Tanks (28, 50) angeordnet ist, das zweite Einlaßrohr (56) eine Mittellinie aufweist, die etwa auf der Hälfte zwischen der radialen Linie und der Tangente angeordnet und etwa 0,4"D" von der Unterseite (51) des Tankes (28, 50) entfernt ist.

5. Der Entlüfter nach einem der Ansprüche 1 bis 4, bei dem der Tank (28, 50) an seinem oberen Ende offen ist.

6. Der Entlüfter nach einem der Ansprüche 1 bis 4, bei dem der Tank (28, 50) an seinem oberen Ende geschlossen ist.

7. Eine Einrichtung zum Mischen von Sauerstoff mit Pulpe mit dem Entlüfter nach einem der Ansprüche 1 bis 6, der eine das erste Einlaßrohr (27) mit einem Auslaß eines Reaktortanks (23) verbindende Einrichtung (25, 26), eine den Auslaß (53) an einen Einlaß eines Wäschers (33) zum Trennen eines Pulpenschlamms in eine Pulpenmatte und ein Filtrat verbindende Einrichtung (32), und eine Einrichtung (46) enthält, die das zweite Einlaßrohr (56) mit einem Filtrat aus dem Wäscher (33) sammelnden Filtrattank (42) verbindet.

8. Die Einrichtung nach Anspruch 7, in der der Tank (28, 50) einen Durchmesser aufweist, der 0,75 bis 1,5 mal dem Durchmesser des Reaktortanks (23) entspricht.

**Revendications**

1. Un désaérateur comprenant un réservoir (28, 50) fermé à sa base (51) et présentant un diamètre "D", une tubulure d'entrée (27) située sur ledit réservoir (28, 50) et une sortie (53) dudit réservoir (28, 50), caractérisé par le fait que:
— ledit réservoir (28, 50) présente une hauteur située dans une plage allant de 1 à 3"D", et par une première et une deuxième tubulure d'entrée (27, 56) située sur le dit réservoir (28, 50), ladite première tubulure d'entrée (27) s'étendant d'un côté à l'autre dudit réservoir (28, 50), sur un diamètre et s'étendant, dans ledit réservoir (28, 50), sur plus de 0,5"D",
— ladite première tubulaire d'entrée (27) étant située dans une plage comprise entre 10 et 50% de la hauteur dudit réservoir (28, 50), en partant du haut du réservoir (28, 50),
— ladite sortie (53) étant disposée à la base (51) dudit réservoir (28, 50),
— ladite seconde tubulaire d'entrée (56) étant disposée sur le côté du réservoir (28, 50),
— ladite seconde tubulure d'entrée (56) s'étendant en une direction située entre une tangente au réservoir (28, 50) et une ligne radiale du réservoir (28, 50) qui est perpendiculaire à la ligne radiale passant par le point de tangence,
— ladite seconde tubulure d'entrée (56) étant située dans une plage allant de 15 à 25% de la hauteur du réservoir (28, 50), au-dessus de la base (51) du réservoir (28, 50).

2. Le désaérateur de la revendication 1, dans lequel l'axe de ladite sortie (53) est situé directement au-dessous de la sortie de ladite tubulure d'entrée (27).

3. Le désaérateur de la revendication 2, dans lequel ladite sortie (53) est située approximativement à 0,25"D" de la paroi opposée à ladite première sortie de la tubulure d'entrée.

4. Le désaérateur de l'une quelconque des revendications 1 à 3, dans lequel:
— ledit réservoir (28, 50) présente une hauteur d'approximativement 2"D",
— ladite entrée (27) présente un axe horizontal situé approximativement à 0,5"D" du haut dudit réservoir (28, 50),
— ladite seconde tubulure d'entrée (56) présente un axe situé approximativement à mi-chemin entre ladite ligne radiale et ladite tangente et à approximativement 0,4"D" de la base (51) dudit réservoir (28, 50).

5. Le désaérateur de l'une quelconque des revendications 1 à 4, dans lequel ledit réservoir (28, 50) est ouvert sur le dessus.

6. Le désaérateur de l'une quelconque des revendications 1 à 4, dans lequel ledit réservoir (28, 50) est fermé sur le dessus.

7. Une installation de mélange d'oxygène et de pulpe, comprenant le désaérateur de l'une quelconque des revendications 1 à 6, comprenant des moyens (25, 26) reliant ladite première tubulaire d'entrée (27) à une sortie d'un réservoir de réacteur (23), des moyens (32) reliant ladite sortie (53) à une entrée d'un laveur (33), en vue de séparer une boue de pulpe en un matelas de pulpe et en un filtrat, et des moyens (46) reliant ladite seconde tubulure d'entrée (56) à un réservoir de filtrat (42) collectant le filtrat provenant dudit laveur (33).

8. L'installation de la revendication 7, dans laquelle ledit réservoir (28, 50) présente un diamètre allant de 0,75 à 1,5 fois le diamètre dudit réservoir de réaction (23).

*Fig.1*

EP 0 215 781 B1

Fig.2

Fig.3

Fig.4